**Europäisches Patentamt**

**European Patent Office**

**Office européen des brevets**

(19)

(11) Publication number: **0 062 947**

**A1**

(12) # EUROPEAN PATENT APPLICATION

(21) Application number: **82200399.2**

(22) Date of filing: **31.03.82**

(51) Int. Cl.³: **G 01 C 21/08**

(30) Priority: **14.04.81 NL 8101833**

(43) Date of publication of application:
**20.10.82 Bulletin 82/42**

(84) Designated Contracting States:
**CH DE FR GB IT LI NL SE**

(71) Applicant: **Observator B.V.**
**Steenhouwerstraat 15**
**NL-3194 AG Rotterdam-Hoogvliet(NL)**

(72) Inventor: **Cramwinkel, Johannes Frederik**
**Berglustlaan 26**
**3054 BH Rotterdam(NL)**

(74) Representative: **de Vries, Johannes Hendrik**
**Fokke et al,**
**Octrooibureau Los en Stigter B.V. P.O. Box 20052**
**NL-1000 HB Amsterdam(NL)**

(54) **Apparatus for determining the course angle of a vessel or vehicle.**

(57) An apparatus for determining the course angle of a vessel or vehicle with respect to the magnetic meridian at the location of the vessel or vehicle comprises a first and a second probe (1, 2). The probes (1, 2) are mounted at least rotationally fixed in the vessel or vehicle in measuring directions (4, 5) mutually enclosing an angle. The probes (1, 2) each provide an output signal dependent on a change of the magnetic flux in the respective probes (1, 2) as caused by a change of the course angle of the vessel or vehicle. Both said probes (1, 2) are coupled with a processor unit which derives the course angle of the vessel or vehicle from said output signals.

fig.1

Apparatus for determining the course angle of a vessel or vehicle.

The invention relates to an apparatus for determining the course angle of a vessel or vehicle with respect to the magnetic meridian at the location of the vessel or vehicle.

A known apparatus of this type is a cardan suspended magnetic compass. The operation of such a magnetic compass is based on the principle that a compass needle will be directed in accordance with the horizontal component of the magnetic field at the location of the compass. However, the magnetic compass has the disadvantage that in stead of the direction of the horizontal component of the earth magnetic field, the direction of the horizontal component of the over-all magnetic field at the location of the compass is indicated. In a vessel or vehicle this magnetic field is strongly affected by the presence of ferro-magnetic construction material of the vessel or vehicle. Therefore, comprehensive and cumbrous provisions should be made to eliminate interferences of the earth magnetic field in order to guarantee that the compass indicates the direction of the magnetic meridian at the location of the compass.

The invention aimes to provide an apparatus of the above-mentioned kind, wherein this disadvantage is obviated in a simple but nevertheless effective manner.

To this end, the apparatus according to the invention is characterized by a first and a second probe which are mounted at least rotationally fixed in the vessel or vehicle in measuring directions mutually enclosing an angle, said probes each providing an output signal dependent on a change of the magnetic flux in the respective probes as caused by a change of the course angle of the vessel or vehicle, wherein both said probes are coupled with a processor unit which derives the course angle of the vessel or vehicle from said output signals.

According to a first embodiment both said probes are made as a flat wire coil mounted completely fixed in the vessel or vehicle, said wire coils each having a great number of windings with a diameter in the order of magnitude of 1 m. Thereby, it is obtained that, at movements of the vessel or vehicle, the flux enclosed by the probes due to the magnetic field of the vessel or vehicle, does not change so that the output signals of the probes are only dependent on the movement of the vessel or vehicle with respect to the earth magnetic field.

According to the invention a compensating device can be provided for compensating the output signals of both said probes as caused by the vertical component of the earth magnetic field at the location of the vessel or vehicle, which compensating device according to the invention comprises a third and a fourth probe which are mounted completely fixed in the vessel or vehicle and the measuring directions of which extend parallel to the measuring directions of the first and the second probe, respectively, and a magnet, the magnetic field of which is opposite to the vertical component of the earth magnetic field, wherein the sensitivity of the third and fourth probes is a small fraction of the sensitivity of the first and second probes, while the strength of said magnet is much greater than the strength of the vertical component of the earth magnetic field, wherein the output signals of the third and the fourth probe are added to the output signals of the first and the second probe, respectively.

According to an alternative embodiment of the invention both said probes each consist of at least two coils connected in series and disposed diametrically opposite of each other on an annular core of a magnetic material with high permeability. In this manner it is obtained that the magnetic flux enclosed by the probes is substantially increased so that the diameter of the windings of the respective coils can be chosen much smaller.

According to a favourable embodiment the annular core is in this case mounted in the vessel or vehicle by means of a cardan suspension, wherein preferably a magnet is disposed in the centre of the annular core, and the magnetic field of said magnet is directed oppositely to the vertical component of the magnetic field of the vessel or vehicle and corresponds in magnitude to the magnitude of said vertical component.

The invention will hereinafter be further explained by reference to the drawings, in which some embodiments of the apparatus according to the invention are shown.

Fig. 1 schematically shows a vessel on a course enclosing an angle with the magnetic meridian at the location of the vessel, which vessel is equiped with an embodiment of the apparatus according to the invention having a probe directed longitudinally of the vessel and a probe directed transverse to the vessel.

Fig. 2 shows an electric circuit of the apparatus used in the vessel of fig. 1.

Fig. 3 schematically shows an embodiment of a compensating device which can be used at the apparatus according to fig. 1.

Fig. 4 shows an electric circuit of the apparatus used at the vessel of fig. 1, to which the compensating device of fig. 3 is added.

Figs. 5a - 5d schematically show an alternative embodiment of the apparatus according to the invention, wherein the probes are disposed on an annular core.

Fig. 6a is a schematically shown cross-section of a practical embodiment of the apparatus according to the invention, wherein the probes are disposed on an annular core.

Fig. 6b schematically shows a top view of the apparatus according to fig. 6a.

Fig. 7 shows an electric circuit of an embodiment of the apparatus according to the invention .

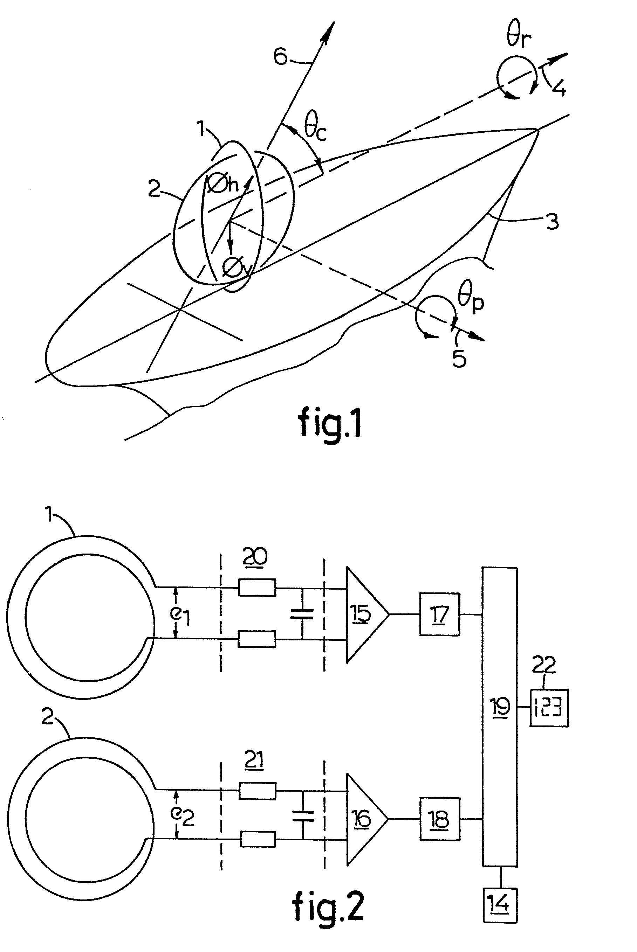

In the embodiment of the apparatus according to fig. 1, a first probe and a second probe are formed by an air coil 1 with a main axis 4 parallel to the longitudinal direction of a vessel 3, and by an air coil 2 with a main axis 5 parallel to the transverse direction of the vessel 3, respectively. Both probes 1, 2 are immovably disposed with respect to the vessel 3.

The course angle $\theta_c$ to be measured is the angle measured in the horizontal plane between the magnetic meridian 6 and the longitudinal direction 4 of the vessel 3. The vessel 3 is usually subject to roll movements and pitch movements. The roll angle $\theta_r$ is the angle measured in a vertical plane perpendicular to the longitudinal direction 4 of the vessel and amounts to 0° when the vessel lies straight. The pitch angle $\theta_p$ is the angle measured in a vertical plane perpendicular to the transverse direction 5 of the vessel 3 and amounts to 0° when the vessel lies straight.

The earth magnetic field prevailing at the location of the vessel 3 has the horizontal component $\emptyset_h$ and the vertical component $\emptyset_v$. $W_1$ and $W_2$ are the products of the surface area and the number of windings of the probes 1 and 2, respectively. For the flux enclosed by the respective probes 1 and 2 due to the earth magnetic field, the following equations apply:

$$\emptyset_1 = W_1 \ \emptyset_h \cos \theta_c \cos \theta_p + W_1 \ \emptyset_v \sin \theta_p \qquad (1)$$

$$\emptyset_2 = W_2 \ \emptyset_h \sin \theta_c \cos \theta_r + W_2 \ \emptyset_v \sin \theta_r \qquad (2)$$

In practice $\theta_p < 5°$ and $\theta_r < 15°$ normally applies, so that it may be assumed that $\cos \theta \approx 1$ and $\sin \theta \approx \theta$. In this case, the equations (1) and (2) can be written as follows:

$$\emptyset_1 = W_1 \ \emptyset_h \cos \theta_c + W_1 \ \emptyset_v \ \theta_p \qquad (1')$$

$$\emptyset_2 = W_2 \ \emptyset_h \sin \theta_c + W_2 \ \emptyset_v \ \theta_r \qquad (2')$$

Due to changes of the course and to variations of the roll angle $\theta_r$ and of the pitch angle $\theta_p$ as caused by the (symmetrically with respect to the vertical) rolling and pitching of the vessel, variations occur in the flux components $\emptyset_1$ and $\emptyset_2$, whereby an electromotive force is generated in the coils 1 and 2. The two probes 1, 2 also enclose a magnetic flux caused by the remanent magnetism in the iron construction parts of the vessel. However, at changes of course, at roll movements and at pitch movements of the vessel, the flux enclosed by the probes as caused by this remanent magnetism does not change, because the probes 1, 2 do not move with respect to the magnetized construction parts. Therefore, the electromotive force generated in the probes 1, 2 is representing the movement of the vessel with respect to the earth magnetic field, and provisions for eliminating the remanent magnetism at the location of the probes 1, 2 are superfluous.

For the electromotive force generated in the coils 1 and 2 at a movement of the vessel, the following equations apply:

$$e_1 = d\emptyset_1/dt = -W_1 \emptyset_h \sin \Theta_c \, d\,\Theta_c/dt + W_1\emptyset_v \, d\Theta_p/dt \quad (3)$$

$$e_2 = d\emptyset_2/dt = W_2 \emptyset_h \cos \Theta_c \, d\,\Theta_c/dt + W_2\emptyset_v \, d\Theta_r/dt \quad (4)$$

The voltages $e_1$ and $e_2$ can be apprehended as quasi direct-current voltages in view of the inertia of the vessel movements.

As shown in fig. 2, the probes 1, 2 are connected to differential amplifiers 15, 16 through filters 20, 21, which amplifiers amplify the generated output signals of the probes to the desired signal level. Interferences of a relatively high frequency and voltages generated by vibrations of the construction parts onto which the probes 1, 2 are mounted, are eliminated in the filters 20 and 21. The differential amplifiers 15 and 16 provide the amplified signal to an analog/digital converter 17, 18 respectively.

With respect to the necessary amplification, sensitivity and stability it is noted that at a horizontal angular velocity of one arc degree/sec, the electromotive force generated in one winding with a surface of 1 m² amounts to 0,33 $\mu$V at the strength of the horizontal component of the earth magnetic field prevailing in the Netherlands. A round coil with 5000 windings having a diameter of 80 cm and a wire thickness of 0,08 mm, provides a maximum signal of at least 40 $\mu$V at an angular velocity of 0,05 arc degree/sec ( the sensitivity limit of the common curve velocity indicators). The internal resistance of this coil amounts to 88 k$\Omega$, the weight of the coil is 1,13 kg and the cross-section of the over-all winding amounts to 0,5 cm².

The reaction sensitivity and the stability of the combinations 15 - 17 and 16 - 18 of amplifier and analog/digital converter should be between 1 and 10 $\mu V$. By sampling the generated electromotive force $e_1$ and $e_2$ at regular intervals, by digitizing the obtained samples and by adding the digitized results in a processor unit 19 (for example a micro computer), two informations are obtained which apply to the following equations, respectively:

$$\int e_1 dt = W_1 \, \emptyset_h \, (\cos \Theta_c + C_1) + W_1 \, \emptyset_v \, (\Theta_p + C_2) \quad (5)$$

$$\int e_2 dt = W_2 \, \emptyset_h \, (\sin \Theta_c + C_3) + W_2 \, \emptyset_v \, (\Theta_r + C_4) \quad (6)$$

By setting the initial values for $W_1 \, \emptyset_h \cos \Theta_c$ and $W_2 \, \emptyset_h \sin \Theta_c$, respectively, so as to be in accordance with the momentarily valid course angle at the beginning of an integration period ( t = 0), while the vessel lies straight ($\Theta_p$ and $\Theta_r = 0$) or at least $\Theta_p$ and $\Theta_r$ are known, the constants $C_1$ up to $C_4$ in the equations (5) and (6) become equal to zero. For entering said data, the apparatus according to fig. 2 is provided with a keyboard 14.

Because it is assumed that the rolling and pitching of the vessel is symmetrically with respect to the vertical, the result of the integration for the roll angle $\Theta_r$ and the pitch angle $\Theta_p$ is also equal to zero, so that finally the following equations apply at the point of time t = $t_1$:

$$\int e_1 dt = W_1 \, \emptyset_h \cos \Theta_c \quad (5')$$

$$\int e_2 dt = W_2 \, \emptyset_h \sin \Theta_c \quad (6')$$

which gives:

$$\cos \Theta_c = \frac{\int e_1 dt}{W_1 \, \emptyset_h} \quad (7)$$

$$\sin \Theta_c = \frac{\int e_2 dt}{W_2 \, \emptyset_h} \quad (8)$$

From (7) and (8) the course angle $\theta_c$ can be derived and this course angle can be indicated on a display device 22.

If the angular velocity of the rolling and/or pitching of the vessel is low, the terms containing this angular velocity in the equations (3) and (4) can be neglected. In this case, the equations (3) and (4) read as follows:

$$e_1 = -W_1 \, \phi_h \, \sin \theta_c \, d\theta_c/dt \qquad (9)$$

$$e_2 = W_2 \, \phi_h \, \cos \theta_c \, d\theta_c/dt \qquad (10)$$

$$e_1/e_2 = -(W_1/W_2) \, \tan \theta_c \qquad (11)$$

The ratio $W_1/W_2$ is known, so that the momentary value of the course angle $\theta_c$ can be derived. After comparing with the course angle obtained by the integration, the value of the course angle calculated with (11) can be used for the correction of the course angle obtained by the integration, which correction may, for example, be necessitated by drift of the amplifiers or by accumulation of interference signals.

If desired, the signals $e_1$ and $e_2$ can also be used to determine a signal corresponding with the velocity of the change of the course angle. To this end, the signals $e_1$ and $e_2$ should be added up after squaring, whereafter the square root of the sum is determined, which value $V = \sqrt{e_1{}^2 + e_2{}^2}$ corresponds to the magnitude of the velocity. Such an operation can be done by the processor unit 19.

At roll and pitch periods of short duration (for example a duration of 1 up to 5 sec) the sinus shaped interference of the course angle signal caused by the periodical movements can be eliminated by the repetitive measurement of the course angle according to equation (11) within the time duration determined by a plurality of roll and pitch periods, respectively, so that a correct determination of the course angle will be obtained.

At a great value of the amplitude of the rolling and pitching and at a long period thereof, the induction-voltage thus generated and provided by the probes 1 and 2 cannot be neglected anymore, so that these interfering voltages should be eliminated. This can be done by converting the roll movements with respect to the vertical into electrical voltages by means of an artificially generated vertical magnetic field, which voltages are used as a compensation for the interfering induction-voltages in the probes 1 and 2.

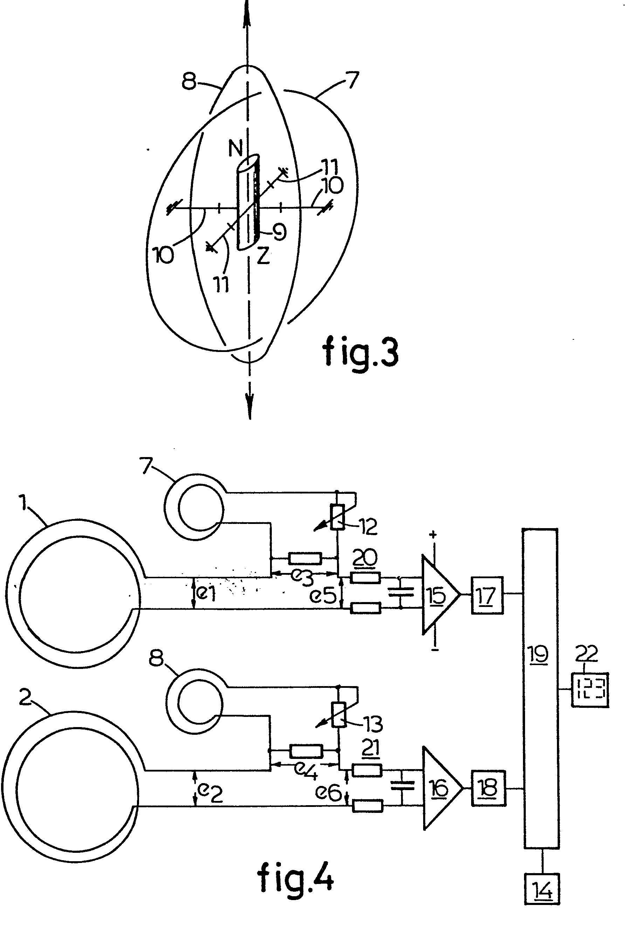

To this end, a compensating device is provided which uses a second set of probes, which probes are mainly affected by the artificial vertical field. The respective output voltages of said second set of probes are used for compensating the electromotive forces generated in the probes 1 and 2 by the rolling and/or pitching. In fig. 3 said second set of probes consisting of coils 7 and 8, is shown as disposed around a magnet 9 providing the artificial vertical field. Fig. 4 shows a circuit in which the output signals of the probes 7 and 8 are combined with those of the probes 1 and 2, respectively.

The probe 7 is immovably disposed with respect to the vessel 3 ("ship-fixed") in a plane parallel to the coil 1. At a diameter which, for example, amounts to 10% of the diameter of the coil 1, the electromotive force generated in coil 7 as caused by movements with respect to the local magnetic field is only 1% of the electromotive force in the coil 1. The probe 8 is immovably disposed in a plane parallel to the coil 2. The coils 7 and 8 are mainly affected by the permanent magnet 9 which is cardan suspended in their centre by means of bearings 10 and 11. Because the magnet 9 is part of a freely movable pendulum which may be viscousely damped or not, the position of the magnet 9 is normally in the vertical. The filters 20 and 21 shown in the circuit of fig. 4 also eliminate the interfering voltages generated by the coils 7 and 8 as caused by vibrations and by self-vibrations of the magnetic pendulum 9 - 10 - 11 with a high vibration rate. After voltage division in adjusting resistances 12 and 13 which are adjusted by means of a scale calibrated in the vertical intensity of the earth magnetic field to be compensated, the following values for the electromotive force are obtained:

$$e_3 = W_7 \, \emptyset_m \, d\theta_p/dt \qquad (12)$$

$$e_4 = W_8 \, \emptyset_m \, d\theta_r/dt \qquad (13)$$

wherein $W_7$ and $W_8$ are the product of surface area and number of windings for the coils 7 and 8, respectively, and wherein $\emptyset_m$ is the field strength of the magnet 9. This field strength $\emptyset_m$ should be higher than the vertical component of the earth magnetic field.

By adding, the following equations are obtained:

$$e_5 = e_1 + e_3 = -W_1\emptyset_h \, \sin\theta_c \, d\theta_c/dt +$$
$$W_1\emptyset_v \, d\theta_p/dt - W_7 \, \emptyset_m \, d\theta_p/dt \qquad (14)$$

$$e_6 = e_2 + e_4 = W_2\emptyset_h \, \cos\theta_c \, d\theta_c/dt +$$
$$W_2\emptyset_v \, d\theta_r/dt - W_8 \, \emptyset_m \, d\theta_r/dt \qquad (15)$$

By adjusting the resistances 12 and 13 in a suitable manner, the second and third terms of the equations (14) and (15) eliminate each other so that the equations (9), (10) and (11) are obtained as a result, from which the course angle $\theta_c$ can be derived.

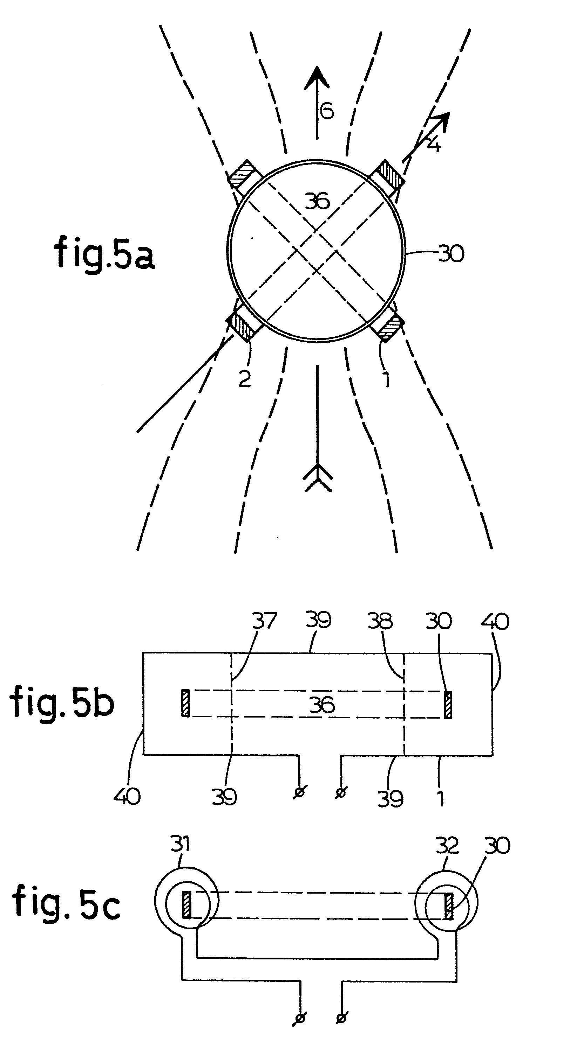

Fig. 5a shows the principle of an embodiment, wherein the crosswise placed probes 1 and 2 are disposed on a common annular core 30 of magnetic material with a high permeability (for example mu-metal). Thereby, a concentration of the earth magnetic field 6 will occur, because a great part of the lines of force will extend through parts of the ring 30 lying in their path. This causes a substantial increase of the signal strength at rotation of the probes 1 and 2 in the magnetic field of the earth, while the measuring accuracy is maintained at a sufficient rotation - symmetry of the ring 30.

As appears from fig. 5b, the shape of the coil 1 ( in side view) and 2 (not shown) can be adapted to the ring 30 as the magnetic lines of force now extend through the ring 30 and the surface outside of the ring 30 does not contribute to the magnitude of the induction-signal. At rotation in the horizontal plane, the horizontal parts 39 of each winding do not contribute to the electromotive force at the terminals of the coil 1, while the vertical parts 40 generate voltages which add to the output of coil 1 because of their opposite movements with respect to the magnetic lines of force.

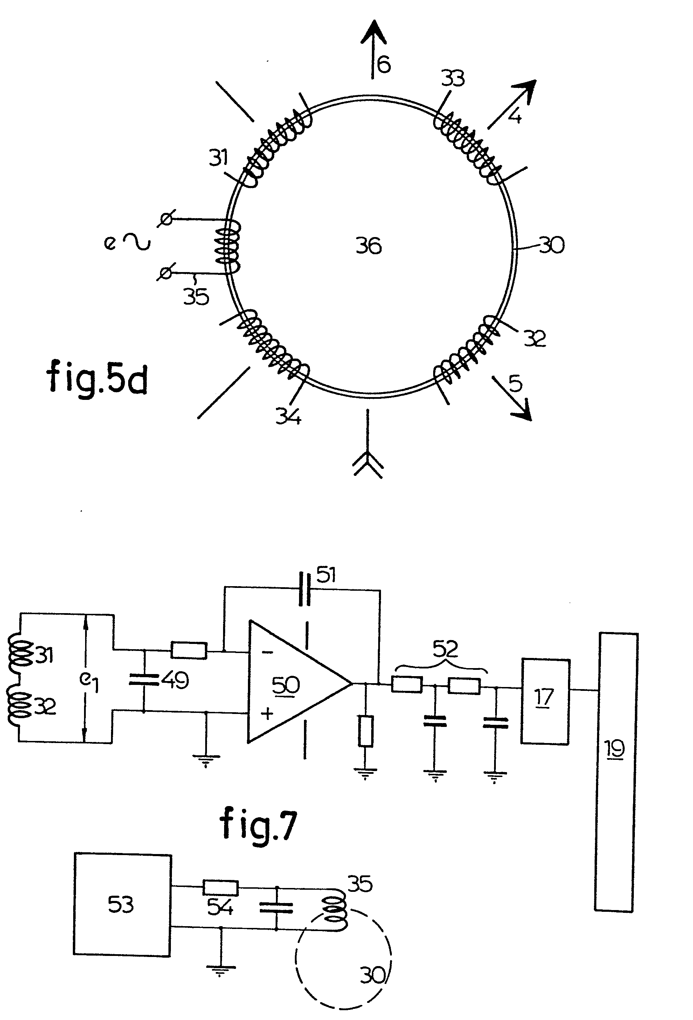

If the horizontal parts 39 of each winding are substituted by vertical parts 37 and 38, nothing is changed for the voltage at the terminals of the coil 1, because the parts 37 and 38 lie within the field-free space 36 within the mu-metal ring 30. Thereby, the probe 1 can be assembled of two diametrically disposed wire coils 31 and 32 wound around the ring 30, as shown in fig. 5c, wherein the function of the probe 1 is maintained. Fig. 5d shows a top view, wherein the probe 2 is also assembled of coils 33 and 34 diametrically disposed on the ring 30 in an identical manner.

The substitution of the air coils with a great diameter for coils with a small diameter wound around a mu-metal annular core has the advantage that for the same signal amplitude a significant decrease of the resistance of the coils is obtained, which favourably influences the stability of the signal at amplification thereof.

A further coil 35 is disposed on the ring 30, which coil is connected to an ac-source. Thereby, an alternating flux is generated in the ring 30, which flux eliminates the magnetic hysteresis occuring in the ring 30 at a rotation in the horizontal plane. As the coil pairs 31 - 32 and 33 - 34 are oppositely connected for a magnetic flux circulating in the ring 30, the alternating flux does not cause interfering signals at the inputs of the measuring system for the course determination. In the embodiment of fig. 5d the compensating device of fig. 3 can be used, if desired.

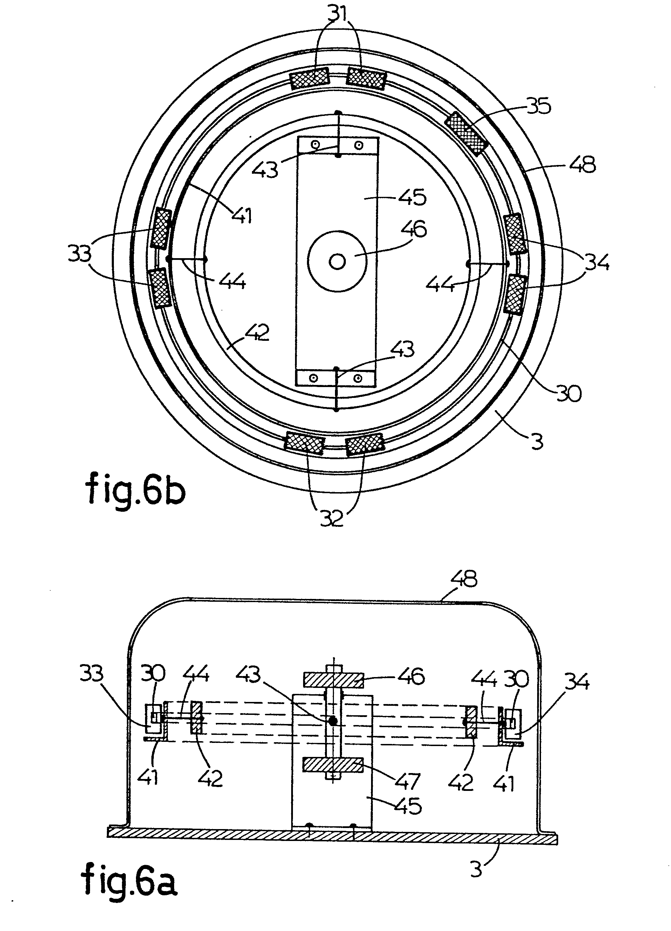

Figs. 6a and 6b show an embodiment of the apparatus, wherein the probes according to fig. 5 are used. The ring 30, to which the coils 31 - 34 are disposed, is supported on a ring 41 with a L-shaped cross-section, which ring 41 is cardan suspended to a support 45 by means of an intermediate ring 42 and cardan axes 43 and 44, wherein the support 45 is fixed to the vessel 3. Two magnets 46 and 47 are mounted in the centre of the ring 30, which magnets have such a polarisation and field strength

0062947

that they eliminate the vertical component of the magnetic field of the vessel 3 at the location of the ring 30. The magnets 46, 47 can be made as a permanent magnet or as an electro-magnet. By means of the magnets 46, 47 it is obtained that the vertical component of the magnetic field of the vessel 3 does not generate induction-voltages in the coils 31 - 34 at rolling and pitching of the vessel 3. Because the ring 30 with the coils 31 - 34 is rotationally fixed to the vessel 3, the horizontal component of the magnetic field of the vessel 3 causes no induction-voltages in the coils 31 - 34 at a change of course angle, as the ring 30 with the coils 31 - 34 and the vessel 3 make the same movement in the horizontal plane.

Therefore, the coils 31 - 34 provide only induction-voltages dependent on the horizontal component of the earth magnetic field at the location of the vessel 3 at a change of course of the vessel 3.

Without the application of the magnets 46, 47 the vertical component of the magnetic field of the vessel 3 could cause an interfering signal in the coils 31 - 34 due to the often long roll periods of the vessel, which interfering signals have a low frequency in the range of the frequencies occuring at a change of course angle. Therefore, these interfering signals cannot be suppressed by means of an electrical filter.

The interfering signals generated by the own oscillating movements of the ring 30 with the coils 31 - 34 in the cardan suspension 42 - 45, have a high frequency so that these signals can be suppressed by an electrical filter without significantly affecting the signals generated by a change of course angle.

The cardan suspended ring 30 can be closed off by means of a cap 48 fixed to the vessel 3.

Fig. 7 shows an electric circuit which can be used at the embodiment of the probes according to fig. 6, wherein the generated induction-signals are integrated in an analog manner. The circuit is only shown for the probe 31, 32 for the longitudinal direction as the embodiment for the probe 33, 34 is equal therewith.

The induction-signal $e_1$ generated in the coils 31, 32 as caused by the changes of flux in the ring 30, is applied to an operational amplifier 50 through a filter 49, which amplifier 50 is connected as an integrator by means of a feed-back capacitor 51. The filter 49 is provided for suppression of incidental voltage peaks in order to prevent current saturation in the amplifier 50. The output of the integrator 50, 51 provides a signal corresponding to $\int e_1 dt$, wherein an interfering signal can be present caused by the oscillating movements of the cardan suspension of the ring 30. This interfering signal is suppressed by means of the filter 52. The output of the filter 52 is connected to the analog/digital converter 17, which is connected to the processor unit 19. The processor unit 19 determines the desired course angle from the provided signals, according to the equations (7) and (8). The course angle is indicated on the display device 22.

An oscillator 53 provides an ac-voltage which is supplied to the coil 35 through a filter 54. Thereby, the alternating flux is generated in the ring 30 as described to eliminate the magnetic hysteresis occuring therein at a rotation in the horizontal plane.

The invention is not restricted to the above-described embodiments which can be varied in a number of ways within the scope of the invention.

CLAIMS:

1. Apparatus for determining the course angle of a vessel or vehicle with respect to the magnetic meridian at the location of the vessel or vehicle, c h a r a c - t e r i z e d by a first and a second probe which are mounted at least rotationally fixed in the vessel or vehicle in measuring directions mutually enclosing an angle, said probes each providing an output signal dependent on a change of the magnetic flux in the respective probes as caused by a change of the course angle of the vessel or vehicle, wherein both said probes are coupled with a processor unit which derives the course angle of the vessel or vehicle from said output signals.

2. Apparatus according to claim 1, c h a r a c- t e r i z e d in that the measuring direction of the first probe extends in the longitudinal direction of the vessel or vehicle and in that the measuring direction of the second probe extends in the cross direction of the vessel or vehicle.

3. Apparatus according to claim 1 or 2, c h a r - a c t e r i z e d in that an integrator is provided for each probe, which integrator integrates the output signal of the corresponding probe, wherein the processor unit derives the course angle from the integrated signals.

4. Apparatus according to anyone of the preceding claims, c h a r a c t e r i z e d in that both said probes are made as a flat wire coil mounted completely fixed in the vessel or vehicle, said wire coils each having a great number of windings with a diameter in the order of magnitude of 1 m.

5. Apparatus according to claim 4, c h a r a c- t e r i z e d by a compensating device for compensating the output signals of both said probes as caused by the vertical component of the earth magnetic field at the location of the vessel of vehicle.

6. Apparatus according to claim 5, c h a r a c- t e r i z e d in that the compensating device comprises a third and a fourth probe which are mounted completely fixed in the vessel or vehicle and the measuring directions of which extend parallel to the measuring directions of the first and the second probe, respectively, and a magnet, the magnetic field of which is opposite to the vertical component of the earth magnetic field, wherein the sensitivity of the third and the fourth probe is a small fraction of the sensitivity of the first and the second probe, while the strength of said magnet is much greater as the strength of the vertical component of the earth magnetic field, wherein the output signals of the third and the fourth probe are added to the output signals of the first and the second probe, respectively.

7. Apparatus according to claim 6, c h a r a c- t e r i z e d in that the third and fourth probes each are made as a flat wire coil having a number of windings with a diameter in the order of magnitude of 0,1 m.

8. Apparatus according to claim 1, 2 or 3, c h a r a c t e r i z e d in that both said probes each consist of at least two coils connected in series and disposed diametrically opposite of each other on an annular core of a magnetic material with high permeability.

9. Apparatus according to claim 8, c h a r a c- t e r i z e d in that the annular core is mounted in the vessel or vehicle by means of a cardan suspension.

10. Apparatus according to claim 9, c h a r a c- t e r i z e d in that a magnet is disposed in the centre of the annular core, wherein the magnetic field of said magnet is directed oppositely to the vertical component of the magnetic field of the vessel or vehicle and corresponds in magnitude to the magnitude of said vertical component.

11. Apparatus according to claim 8, 9 or 10, c h a r a c t e r i z e d in that a further coil is disposed on the annular core, which is connected to an ac-source.

fig.1

fig.2

fig.3

fig.4

fig.5a

fig.5b

fig.5c

fig.5d

fig.7

fig.6b

fig.6a

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 738 088 (C.I.E.R.COMPAGNIA IMPORTAZIONI ESPORTAZIONI RAPPRESENTANCE) *Page 4, paragraph 5 - page 6, line 2; page 12, last paragraph; page 16, first paragraph* | 1-3,5 | G 01 C 21/08 |
| Y | DE-A-2 754 888 (G.KRAMER) *Claims 1,2* | 1,2,9 | |
| A | DE-C- 840 449 (BENDIX AVIATION CORPORATION) *Claims 8,9* | 1,2,5, 6 | |
| A | DE-A-2 709 212 (TELDIX GmbH) *Claim 1* | 1 | |
| A | DE-A-2 651 678 (TELDIX GmbH) *Claims 1-4* | 1-3,5 | **TECHNICAL FIELDS SEARCHED (Int. Cl. ³)** |
| A | GB-A-1 185 974 (AVIATION ELECTRIC LIMITED) *Page 3, lines 32-59* | 1,6 | G 01 C 17/00 G 01 C 21/00 G 01 R 33/00 |
| A | DE-B-2 757 142 (ANSCHUTZ & CO. GmbH) *Column 4, lines 48-56; figures* | 8,11 | |
| P,X | DE-A-2 946 640 (SIEMENS AG) *Page 3 - page 5, line 3* | 1 | |

The present search report has been drawn up for all claims

| Place of search | Date of completion of the search | Examiner |
|---|---|---|
| THE HAGUE | 30-06-1982 | PRATSCH H.R. |